# EUROPÄISCHE PATENTANMELDUNG

(11) **EP 3 477 210 A1**
(43) Veröffentlichungstag der Anmeldung: **01.05.2019**
(21) Anmeldenummer: 18203286.2
(22) Anmeldetag: 30.10.2018
(51) Int. Cl.: F24D 3/10, F24D 19/00, B01J 47/14, C02F 1/00, C02F 1/42

(54) **WASSERAUFBEREITUNGSEINRICHTUNG UND VERFAHREN ZUM NACHFÜLLEN VON HEIZUNGSWASSER EINER HEIZUNGSANLAGE**

(30) Priorität: 30.10.2017 DE 102017125478
(71) Anmelder: Perma-Trade Wassertechnik GMBH, 71229 Leonberg (DE)
(72) Erfinder: Ende, Dietmar, 71287 Weissach (DE); Sautter, Michael, 71229 Leonberg (DE)
(74) Vertreter: Herrmann, Jochen

(57) **Zusammenfassung**

Die Erfindung betrifft eine im Nebenschluss zu einer Heizungsanlage geschaltete Wasseraufbereitungseinrichtung zur Entmineralisierung und zum gleichzeitigen Einstellen des pH-Wertes von Heizungswasser der Heizungsanlage und ein Verfahren zur Zuführung von Nachspeisewasser in einen Heizungskreislauf einer Heizungsanlage. Dabei ist es vorgesehen, Nachspeisewasser zum Ausgleich von Wasserverlusten der Heizungsanlage einem in der Wasseraufbereitungseinrichtung geführten Heizungswasser-Teilstrom zuzuführen und zusammen mit diesem zu entmineralisieren und in seinem pH-Wert einzustellen. Ein Rückfluss des nicht aufbereiteten Nachspeisewassers in die Heizungsanlage wird durch einen Rückflussverhinderer unterbunden.

Die Wasseraufbereitungseinrichtung und das Verfahren zur Zuführung von Nachspeisewasser in einen Heizungskreislauf einer Heizungsanlage ermöglichen das Nachfüllen von Wasser in eine Heizungsanlage, deren Heizungswasser durch eine im Nebenschluss betriebene Wasseraufbereitungseinrichtung entmineralisiert wird, wobei eine niedrige Härte ≤0,1 °dH, wie sie bei großen Kesselanlagen typisch ist, des Heizungswassers erhalten bleibt.

## Beschreibung

Die Erfindung betrifft eine Wasseraufbereitungseinrichtung zur Entmineralisierung und zum gleichzeitigen Einstellen des pH-Wertes von Heizungswasser einer Heizungsanlage, wobei eine Wasserführung der Wasseraufbereitungseinrichtung über zumindest einen Heizungswasser-Zulauf und zumindest einen Ablauf im Nebenschluss derart an die Heizungsanlage anschließbar ist, dass sie in einem Wasseraufbereitungsbetrieb von einem Teilstrom des Heizungswassers durchströmt wird, wobei entlang der Wasserführung zumindest eine Pumpe, ein fernsteuerbares Ventil (Magnetventil), ein lonentauscher, aufweisend Anionen- und Kationentauscher, ein in Strömungsrichtung vor dem lonentauscher angeordneter erster Leitfähigkeitssensor zur Bestimmung einer ersten Leitfähigkeit und ein in Strömungsrichtung nach dem lonentauscher angeordneter zweiter Leitfähigkeitssensor zur Bestimmung einer zweiten Leitfähigkeit angeordnet sind, mit einer Steuerungseinrichtung, welche den Durchfluss durch die Wasseraufbereitungseinrichtung derart steuert, dass sich am ersten Leitfähigkeitssensor eine erste Ziel-Leitfähigkeit und/oder am zweiten Leitfähigkeitssensor eine zweite Ziel-Leitfähigkeit einstellt.

Die Erfindung betrifft weiterhin ein Verfahren zur Zuführung von Nachspeisewasser in einen Heizungskreislauf einer Heizungsanlage, wobei eine Wasseraufbereitungseinrichtung zum Entmineralisieren und zum Einstellen des pH-Wertes des Heizungswassers der Heizungsanlage in einen vorgegebenen pH-Wert-Zielbereich im Nebenschluss mit dem Heizungskreislauf verbunden ist, wobei ein Teilstrom des Heizungswassers in dem Nebenschluss entlang einer Wasserführung über einen lonentauscher, enthaltend einen Kationentauscher und einen Anionentauscher, geleitet wird, wobei in Strömungsrichtung des Teilstroms vor dem lonentauscher ein erster Leitfähigkeitssensor und nach dem lonentauscher ein zweiter Leitfähigkeitssensor angeordnet sind und wobei der Teilstrom des Heizungswassers in zeitlichen Abständen so lange durch die Wasseraufbereitungseinrichtung geleitet wird, dass sich an dem ersten Leitfähigkeitssensor eine vorgegebene erste Ziel-Leitfähigkeit und/oder an dem zweiten Leitfähigkeitssensor eine zweite Ziel-Leitfähigkeit einstellt.

Um Ablagerungen in Heizungsanlagen zu vermeiden oder zumindest zu minimieren ist es bekannt, enthärtetes bzw. entmineralisiertes Heizungswasser zu verwenden. Die Korrosion von Heizungskomponenten kann durch einen alkalisch eingestellten pH-Wert des Heizungswassers vermieden oder zumindest verringert werden. Dabei wird üblicherweise ein pH-Wert im Bereich zwischen 8 und 10 eingestellt. Liegen in der Heizungsanlage aus Aluminium gefertigte Bauteile vor, so ist der pH-Wert des Heizungswassers stärker einzugrenzen, vorzugsweise auf einen Bereich zwischen 8,2 und 8,5.

Aus der DE 10 2014 103 163 A1 ist eine Steuerungseinrichtung zur Steuerung einer Vorrichtung zum Einstellen des pH-Wertes und zur gleichzeitigen Entmineralisierung des Heizungswassers einer Heizungsanlage bekannt. Dazu wird ein Teilstrom des Heizungswassers durch eine im Nebenschluss zu der Heizungsanlage betriebene Entmineralisierungseinrichtung geleitet. Die Entmineralisierungseinrichtung weist einen lonentauscher mit einem Anionen- und einem Kationentauscher auf. In Strömungsrichtung vor dem lonentauscher ist ein erster Leitfähigkeitssensor und nach dem lonentauscher ein zweiter Leitfähigkeitssensor angeordnet. In den Nebenschluss sind eine über die Steuerungseinrichtung ansteuerbare Pumpe und ein ebenfalls von der Steuerungseinrichtung ansteuerbares Magnetventil vorgesehen. Durch entsprechende Ansteuerung der Pumpe und des Magnetventil wird in zeitlichen Abständen so viel Heizungswasser durch die Entmineralisierung Einrichtung geleitet, dass sich an dem ersten Leitfähigkeitssensor eine erste Ziel-Leitfähigkeit und am zweiten Leitfähigkeitssensor eine zweite Ziel-Leitfähigkeit einstellt. Die mit dem ersten Leitfähigkeitssense gemessene erste Leitfähigkeit bildet ein Maß für die Entmineralisierung des Heizungswassers. Die nach dem lonentauscher in dem vollentsalzten Teilstrom des Heizungswassers gemessene zweite Leitfähigkeit korreliert, bei gegebenem lonentauscher, mit dem pH-Wert. Durch Vorgabe der in der Heizungsanlage verwendeten Materialien, insbesondere der Angabe, ob innerhalb der Heizungsanlage Aluminiumbauteile verwendet sind, kann ein geeigneter pH-Wertebereich und daraus unter Berücksichtigung des verwendeten lonentauschers eine geeignete zweite Ziel-Leitfähigkeit abgeleitet werden. Beim Austausch der Mineralien bringt der Anionentauscher OH⁻- und der Kationentauscher H⁺-Ionen in das Heizungswasser ein. Der Anionentauscher ist gegenüber dem Kationentauscher in der Harzmischung des lonentauschers im Überschuss vorhanden und weist eine größere Reaktionsgeschwindigkeit auf. Dadurch steigt während der Entmineralisierung der pH-Wert des behandelten Heizungswassers an. Der pH-Wert des Heizungswassers kann so um 1,5 - 2 pH-Wert-Stufen in den gewünschten Zielbereich angehoben werden. Liegt der pH-Wert des Heizungswassers in seinem Ausgangszustand mehr als 1,5 - 2 pH-Wert-Stufen unter dem Zielbereich kann es erforderlich sein, zusätzlich ein alkalisches Stabilisierungsmittel zuzuführen. Liegt der pH-Wert des Heizungswassers hingegen nach Erreichen der ersten Ziel-Leitfähigkeit über dem gewünschten Bereich, so besteht die Möglichkeit, so lange Heizungswasser durch den lonentauscher zu leiten, bis der Anionentauscher aufgebraucht ist. Beim weiteren Betrieb werden dann nur noch H⁺ - Ionen durch den Kationentauscher an das Heizungswasser abgegeben, wodurch dessen pH-Wert in den Zielbereich gesenkt werden kann. Eine mögliche Unterschreitung der ersten Ziel-Leitfähigkeit wird dabei toleriert.

Nachteilig kann mit einer im Nebenschluss betriebenen Entmineralisierungseinrichtung das Wasser in einem Heizungskreislauf lediglich auf eine Resthärte von 1-1,5°d enthärtet werden, wenn es beispielsweise auf eine erste Leitfähigkeit von 50 µS/cm entsalzt wird. Die gültigen Richtlinien (VDI 2035 und ÖNORM H5 1195-1) geben jedoch für größere Anlagen (P> 600 KW; SAV> 50l/kW) eine maximal zulässige Resthärte von 0,1 bzw. 0,6°d vor. Heizungsanlagen werden daher mit enthärtetem Wasser, welches die geforderte Härte aufweist, befüllt. Dazu ist es erforderlich, beim Befüllen der Heizungsanlage einen gesonderten lonentauscher in die Zuführung des Nachspeisewassers zu schalten. Während des Betriebs der Heizungsanlage wird die so erhaltene, geringe Wasserhärte des Heizungswassers durch die im Nebenschluss betriebene Entmineralisierungseinrichtung aufrechterhalten.

Beim Ausgleich von Wasserverlusten mit Trinkwasser, welches der Heizungsanlage zugeführt wird, wird die Härte des Heizungswassers erhöht und kann mittels der im Nebenschluss betriebenen Entmineralisierungseinrichtung nicht unter den Bereich von 1-1,5°d enthärtet werden. Daher muss auch das der Heizungsanlage in zeitlichen Abständen zugeführte Nachspeisewasser durch einen gesonderten lonentauscher entmineralisiert oder enthärtet werden.

Es ist Aufgabe der Erfindung, eine Wasseraufbereitungseinrichtung zur Entmineralisierung und zum gleichzeitigen Einstellen des pH-Wertes von Heizungswasser einer Heizungsanlage bereitzustellen, welche auch beim Nachfüllen der Heizungsanlage mit Nachspeisewasser eine niedrige Härte des Heizungswassers ermöglicht.

Es ist weiterhin Aufgabe der Erfindung, ein entsprechendes Verfahren zur Zuführung von Nachspeisewasser in einen Heizungskreislauf einer Heizungsanlage bereitzustellen.

Die die Wasseraufbereitungseinrichtung betreffende Aufgabe der Erfindung wird dadurch gelöst, dass in Strömungsrichtung des durch die Wasseraufbereitungseinrichtung fließenden Teilstroms vor dem lonentauscher und vor dem fernsteuerbaren Ventil (Magnetventil) ein über eine Wasserzuführung an ein Wasser-Verteilungsnetz anschließbarer Nachspeisewasser-Zulauf Zugang zu der Wasserführung der Wasseraufbereitungseinrichtung schafft, und dass in Strömungsrichtung des durch die Wasseraufbereitungseinrichtung fließenden Teilstroms vor dem Nachspeisewasser-Zulauf ein Rückflussverhinderer in die Wasserführung geschaltet ist. Nachspeisewasser zum Ausgleich von Wasserverlusten der Heizungsanlage kann so dem Wasser-Verteilungsnetz entnommen und vor dem lonentauscher dem durch die Wasseraufbereitungseinrichtung fließenden Teilstrom des Heizungswassers zugeführt werden. Das gesamte zugeführte Nachspeisewasser wird, zusammen mit dem in der Wasserführung der Wasseraufbereitungseinrichtung fließenden Heizungswasser, von dem lonentauscher entmineralisiert. Das Nachspeisewasser wird so lange nachgeführt, bis in der Heizungsanlage wieder die geforderte Wassermenge bzw. der geforderte Heizungswasserdruck vorliegt.

Durch Vorgabe einer Zielleitfähigkeit am zweiten Leitfähigkeitssensor kann der pH-Wert in die gewünschte Richtung dirigiert werden. Bei Mischbett-Ionentauschern mit Anionen-und Kationentauschern, beispielsweise im Verhältnis 60:40, kann aufgrund der höheren Reaktionsgeschwindigkeit des im Überschuss vorhandenen Anionentauschers der pH-Wert des Heizungswassers zunächst etwas angehoben werden. Beim Überfahren des Mischbetts, also wenn der lonentauscher erschöpft ist, kann der pH-Wert des Heizungswassers anschließend um 1 bis 2 pH-Wert-Stufen gesenkt werden. Bei aufgebrauchtem Anionentauscher ist nur noch der Kationentauscher aktiv und bringt H+ - Ionen in das Wasser ein, wodurch der pH-Wert sinkt. Die Strömungsgeschwindigkeit durch den lonentauschauscher kann dabei so gewählt werden, dass der Anionentauscher mehr Hydroxidionen abgibt, als der Kationentauscher Protonen. Dies ist vorzugsweise bei geeignet gewählten erhöhten Strömungsgeschwindigkeiten der Fall. Ist eine weitere Erhöhung des pH-Werts erforderlich, so kann zusätzlich ein alkalisches Stabilisierungsmittel an einer dafür vorgesehenen Schleuse zugegeben werden.

Das Nachspeisewasser muss einen höheren Druck als das in der Wasserführung der Wasseraufbereitungseinrichtung geführte Heizungswasser aufweisen, damit es diesem zugemischt werden kann. Durch den erfindungsgemäßen Rückflussverhinderer wird verhindert, dass das über den Nachspeisewasser-Zulauf zugeführte Nachspeisewasser entgegen der vorgesehenen Strömungsrichtung über den Heizungswasser-Zulauf der Wasseraufbereitungseinrichtung in den Heizwasserkreislauf gelangt, ohne zuvor den lonentauscher zu passieren. Durch den Rückflussverhinderer ist somit sichergestellt, dass das gesamte zugeführte Nachspeisewasser enthärtet, bzw. entmineralisiert wird. Damit wird erreicht, dass die Härte des Heizungswassers durch das Nachfüllen mit zuvor nicht enthärtetem Nachspeisewasser auch bei Verwendung einer im Nebenschluss betriebenen Wasseraufbereitungseinrichtung nicht unzulässig ansteigt.

Da der Nachspeisewasser-Zulauf in Strömungsrichtung des durch die Wasseraufbereitungseinrichtung fließenden Teilstroms vor dem fernsteuerbaren Ventil der Wasseraufbereitungseinrichtung angeordnet ist, kann der Zustrom von Nachspeisewasser zu dem lonentauscher und von dort in die Heizungsanlage mit dem fernsteuerbaren Ventil unterbrochen werden.

Entsprechend einer bevorzugten Ausgestaltungsvariante der Erfindung kann es vorgesehen sein, dass in die Wasserzuführung ein Druckminderer geschaltet ist. Der Druckminderer reduziert den Druck des Nachspeisewassers im Bereich des Nachspeisewasser-Zulaufs vorzugsweise auf einen gewünschten Solldruck der Heizungsanlage. Liegen keine Wasserverluste in der Heizungsanlage vor, so weist das Heizungswasser ebenfalls den Solldruck auf. Damit entspricht der Druck des Nachspeisewassers dem Druck des Heizungswassers, sodass kein Nachspeisewasser über den Nachspeisewasser-Zulauf in die Wasseraufbereitungseinrichtung und damit die Heizungsanlage strömt. Befindet sich jedoch während eines Wasseraufbereitungsbetriebs zu wenig Heizungswasser in der Heizungsanlage, so liegt der Druck des Heizungswassers unter dem geforderten Solldruck und damit auch unter dem Druck des Nachspeisewassers. Das Nachspeisewasser strömt jetzt über den Nachspeisewasser-Zulauf in die Wasserführung der Wasseraufbereitungseinrichtung ein. Es ist somit kein gesondertes Absperrventil erforderlich, um den Zulauf des Nachspeisewassers zu regulieren. Während jedes Wasseraufbereitungsbetriebs wird selbsttätig so lange Nachspeisewasser zugeführt, bis der Druck des Heizungswassers wieder dem Solldruck entspricht.

Ist es vorgesehen, dass in die Wasserzuführung ein Systemtrenner geschaltet ist, so kann sicher vermieden werden, dass Heizungswasser in das Wasser-Verteilungsnetz, insbesondere das Trinkwassernetz, gelangt.

Besonders bevorzugt kann es vorgesehen sein, dass in die Wasserzuführung ein Wasserzähler geschaltet ist. Der Wasserzähler ermittelt die Menge des der Wasseraufbereitungseinrichtung und damit der Heizungsanlage zugeführten Nachspeisewassers. Größere Leckagen in der Heizungsanlage können so mit Hilfe des Wasserzählers nachgewiesen werden. Auch kann die Menge des nachgefüllten Nachspeisewassers indirekt über die Restkapazität des lonentauschers berücksichtigt werden.

Die Aufbereitung des Heizungswassers auf eine geforderte Wasserhärte und einen geforderten pH-Wert kann dadurch erreicht werden, dass die Steuerungseinrichtung zumindest mit der Pumpe, den Leitfähigkeitssensoren, dem fernsteuerbaren Ventil (Magnetventil) und einem in die Wasserführung integrierten Durchflussmesser verbunden ist und dass die Steuerungseinrichtung dazu ausgebildet ist, in Abhängigkeit von einer oder mehreren zeitlichen Vorgaben dass fernsteuerbar Ventil (Magnetventil) zu öffnen und die Pumpe einzuschalten und in Abhängigkeit von einer mit dem ersten Leitfähigkeitssensor gemessenen ersten Leitfähigkeit und/oder einer mit dem zweiten Leitfähigkeitssensor gemessenen zweiten Leitfähigkeit und/oder einer mit dem Durchflussmesser gemessenen Durchflussmenge das fernsteuerbare Ventil (Magnetventil) zu schließen und die Pumpe auszuschalten. Der Wasseraufbereitungsbetrieb kann so in vorgegebenen zeitlichen Abständen, beispielsweise einmal täglich, durch Öffnen des fernsteuerbaren Ventils und Betrieb der Pumpe eingeleitet werden. Durch die Messung der Leitfähigkeit des durch die Wasseraufbereitungseinrichtung strömenden Wassers vor und nach dem lonentauscher kann der Fortschritt der Entmineralisierung gemessen werden. Liegen die gewünschten Wassereigenschaften vor, wird durch Abschalten der Pumpe und Schließen des fernsteuerbaren Ventils der Wasseraufbereitungsbetrieb beendet. Nachspeisewasser kann während des Wasseraufbereitungsbetriebs zuströmen. Nach Beendigung des Wasseraufbereitungsbetriebs verhindern der Rückflussverhinderer und das fernsteuerbar Ventil einen weiteren Zulauf an Nachspeisewasser. Mit Hilfe des Durchflussmessers und den Messwerten des ersten Leitfähigkeitssensors kann die Restkapazität des lonentauschers ermittelt werden. Ist der lonentauscher erschöpft, kann der Wasseraufbereitungsbetrieb unterbrochen werden, um den lonentauscher auszutauschen.

Ein geeigneter pH-Wert des Heizungswassers kann dadurch eingestellt werden, dass die Steuerungseinrichtung dazu ausgebildet ist, die zweite Ziel-Leitfähigkeit in Abhängigkeit von in der Heizungsanlage verwendeten Materialien und/oder dem pH-Wert des Heizungswassers im Ausgangszustand und/oder in Abhängigkeit von dem Aufbau und/oder der Zusammensetzung des verwendeten lonentauschers vorzugeben.

Die das Verfahren betreffende Aufgabe der Erfindung wird dadurch gelöst, dass das Nachspeisewasser in Strömungsrichtung des Teilstroms des Heizungswassers vor dem lonentauscher der Wasserführung der Wasseraufbereitungseinrichtung zugeführt wird. Das Nachspeisewasser wird somit vollständig dem lonentauscher zugeführt und entmineralisiert. Damit wird sicher vermieden, dass die Härte des Heizungswassers innerhalb der Heizungsanlage durch zugeführtes Nachspeisewasser unzulässig ansteigt. Auf eine zusätzliche Einrichtung zur Entmineralisierung des Nachspeisewassers, wie sie für eine direkte Nachfüllung von Nachspeisewasser in den Heizwasserkreislauf der Heizungsanlage erforderlich ist, kann verzichtet werden

Damit Nachspeisewasser dem in der Wasserführung der Wasseraufbereitungseinrichtung fließenden Teilstrom des Heizungswassers zufließt muss es einen höheren Druck aufweisen als das Heizungswasser. Um sicherzustellen, dass das unter Druck stehende Nachspeisewasser nur während des Aufbereitungsbetriebs dem in der Wasserführung der Wasseraufbereitungseinrichtung fließenden Teilstrom des Heizungswassers zugeführt und vollständig durch den lonentauscher geleitet wird kann es vorgesehen sein, dass das Nachspeisewasser in Strömungsrichtung des Teilstroms des Heizungswassers vor einem fernsteuerbaren Ventil (Magnetventil) und nach einem Rückflussverhinderer der Wasserführung der Wasseraufbereitungseinrichtung zugeführt wird. Der Rückflussverhinderer unterbindet, dass das Nachspeisewasser während und außerhalb eines Wasseraufbereitungsbetriebs der Wasseraufbereitungseinrichtung entgegen der vorgesehenen Strömungsrichtung innerhalb der Wasserführung der Wasseraufbereitungseinrichtung in den Heizwasserkreislauf der Heizungsanlage strömt. Mit Hilfe des fernsteuerbaren Ventils kann die Strömung innerhalb der Wasserführung der Wasseraufbereitungseinrichtung freigegeben bzw. unterbrochen werden. Außerhalb des Wasseraufbereitungsbetriebs ist das fernsteuerbare Ventil geschlossen, wodurch sowohl der Wasserstrom des Heizungswassers als auch des Nachspeisewassers zu dem lonentauscher hin unterbrochen ist.

Ist es vorgesehen, dass der Druck des Nachspeisewassers auf den Solldruck der Heizungsanlage eingestellt wird, so wird während des Wasseraufbereitungsbetriebs so lange Nachspeisewasser dem in der Wasserführung der Wasseraufbereitungseinrichtung geführten Heizungswassers zugeleitet, bis der Solldruck des Heizungswassers erreicht ist. Während des Wasseraufbereitungsbetriebs wird somit auch der korrekte Wasserdruck der Heizungsanlage eingestellt.

Vorzugsweise kann es vorgesehen sein, dass das Nachspeisewasser der Wasserführung in Strömungsrichtung des Teilstroms des Heizungswassers vor einer in der Wasserführung angeordneten Pumpe der Wasserführung zugeführt wird. Vor der Pumpe weist der in der Wasserführung der Wasseraufbereitungseinrichtung geführte Teilstrom den gleichen oder zumindest annähernd den gleichen Druck wie der Heizkreislauf der Heizungsanlage auf. Durch Zuführung des Nachspeisewassers vor der Pumpe kann daher durch das Nachspeisewasser der korrekte Solldruck des Heizungswassers eingestellt werden.

Ein rechtzeitiger Austausch des lonentauschers kann dadurch sichergestellt werden, dass die Menge des zugeführten Nachspeisewassers bestimmt und bei der Ermittlung der Restkapazität des lonentauschers berücksichtigt wird.

Die Erfindung wird im Folgenden anhand eines in der Figur dargestellten Ausführungsbeispiels näher erläutert. Es zeigt:

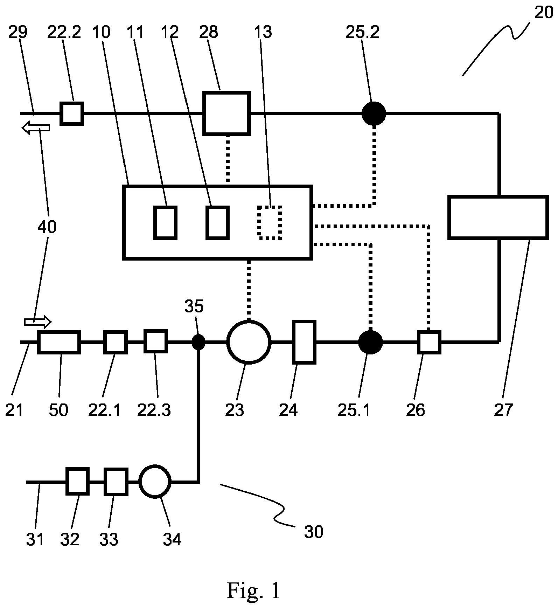

Figur 1 in einer schematischen Darstellung eine Wasseraufbereitungseinrichtung.

Figur 1 zeigt in einer schematischen Darstellung eine Wasseraufbereitungseinrichtung 20. Sie dient der Entmineralisierung und der Einstellung des pH-Wertes von Heizungswasser einer nicht dargestellten Heizungsanlage. Ein Heizungswasser-Zulauf 21 und ein Ablauf 29 ermöglichen den Anschluss der Wasseraufbereitungseinrichtung 20 an einen Heizkreislauf der Heizungsanlage im Nebenschluss. Dazu werden vorzugsweise der Heizungswasser-Zulauf 21, beispielsweise über eine flexible Schlauchverbindung, mit dem Rücklauf und der Ablauf 29 mit dem Vorlauf der Heizungsanlage verbunden. Ausgehend von dem Heizungswasser-Zulauf 21 ist in eine Wasserführung der Wasseraufbereitungseinrichtung 20 zunächst ein Rückflussverhinderer 50 geschaltet. Der Rückflussverhinderer 50 gestattet innerhalb der Wasserführung der Wasseraufbereitungseinrichtung 20 lediglich eine durch Pfeile gekennzeichnete Strömungsrichtung 40 des darin geführten Heizungswasser-Teilstroms von dem Heizungswasser-Zulauf 21 zu dem Ablauf 29. Ein Rücklauf von Wasser aus der Wasseraufbereitungseinrichtung 20 über den Heizungswasser-Zulauf 21 in den Heizwasserkreislauf der Heizungsanlage wird von dem Rückflussverhinderer 50 unterbunden. Dem Rückflussverhinderer 50 in Strömungsrichtung 40 nachfolgend sind ein erstes Absperrventil 22.1 und ein Probeentnahmeventil 22.3 entlang der Wasserführung vorgesehen. Im Anschluss an das Probenentnahmeventil 22.3 stellt ein Nachspeisewasser-Zulauf 35 eine Verbindung zwischen einer Wasserzuführung 30 und der Wasserführung der Wasseraufbereitungseinrichtung 20 her. In Strömungsrichtung nach dem Nachspeisewasser-Zulauf 35 sind eine Pumpe 23, ein Filter 24, ein erster Leitfähigkeitssensor 25.1 und ein fernsteuerbares Ventil in Form eines Magnetventils 26 angeordnet. Nach dem Magnetventil 26 ist die Wasserführung zu einem lonentauscher 27 geleitet. Im Anschluss an den lonentauscher 27 sind ein zweiter Leitfähigkeitssensor 25.2, ein Durchflussmesser 28 und abschließend ein zweites Absperrventil 22.2 entlang der Wasserführung vorgesehen. Die Pumpe 23, die beiden Leitfähigkeitssensoren 25.1, 25.2, das Magnetventil 26 und der Durchflussmesser 28 sind elektrisch mit einer Steuerungseinrichtung 10 verbunden. Die Steuerungseinrichtung 10 weist eine Eingabeeinheit 11, eine Anzeigeeinheit 12 und eine Verarbeitungseinrichtung 13 auf.

Die Wasserzuführung 30 kann über einen Nachspeisewasser-Anschluss 31 mit einem nicht gezeigten Wasser-Verteilungsnetz verbunden werden. Ausgehend von dem Nachspeisewasser-Anschluss 31 sind ein Systemtrenner 32, ein Druckminderer 33 und ein Wasserzähler 34 in der Wasserzuführung 30 angeordnet. Der Systemtrenner 32, der Druckminderer 33 und der Wasserzähler 34 können als Baugruppe zusammengefasst sein.

Mit Hilfe der Absperrventile 22.1, 22.2 kann die Wasserführung der Wasseraufbereitungseinrichtung 20 endseitig verschlossen werden. Damit kann verhindert werden, dass, beispielsweise beim Transport der nicht an eine Heizungsanlage angeschlossenen Wasseraufbereitungseinrichtung 20, Wasser aus dieser herausfließt. Das Probeentnahmeventil 22.3 ermöglicht die Entnahme von Wasserproben. Mit Hilfe der Pumpe 23 wird Wasser durch die Wasserführung und den lonentauscher 27 gepumpt. Der Filter 24 dient der Abtrennung von in dem Heizungswasser geführten Feststoffen. Mit dem ersten Leitfähigkeitssensor 25.1 kann die Leitfähigkeit des in der Wasserführung geführten Wassers vor dem Durchgang durch den lonentauscher 27 und mit dem zweiten Leitfähigkeitssensor 25.2 die Leitfähigkeit nach dem Durchgang durch den lonentauscher 27 gemessen werden. Über das Magnetventil 26 kann der Durchfluss entlang der Wasserführung und durch den lonentauscher 27 freigegeben und geschlossen werden. Der Durchflussmesser 28 dient der Bestimmung der durch den lonentauscher 27 geleiteten Wassermenge. In dem lonentauscher erfolgt eine Entmineralisierung und Einstellung des pH-Wertes des durchgeleiteten Wassers. Er weist dazu in einem Mischbett einen Anionentauscher und einen Kationentauscher auf.

Der Systemtrenner 32 verhindert, dass Heizungswasser über die Wasserzuführung 30 in das Wasser-Verteilungsnetz gelangen kann. Mit dem Druckminderer 33 kann der Druck des Nachspeisewassers eingestellt werden. Der Wasserzähler 34 dient der Bestimmung der der Wasserführung der Wasseraufbereitungseinrichtung 20 zugeführten Menge an Nachspeisewasser.

Zum Betrieb wird zunächst die Wasseraufbereitungseinrichtung 20 mit dem Heizungswasser-Zulauf 21 und dem Ablauf 29 an den Heizkreislauf der Heizungsanlage und mit dem Nachspeisewasser-Anschluss 31 der Wasserzuführung an ein Wasser-Verteilungsnetz, beispielsweise an das Trinkwassernetz, angeschlossen. An dem Druckminderer 33 der Wasserzuführung wird der gewünschte Druck des Nachspeisewassers eingestellt. Vorzugsweise wird der Druck des Nachspeisewassers auf den Solldruck der Heizungsanlage eingestellt. Über die Eingabeeinheit 11 der Steuerungseinrichtung 10 wird eine erste Ziel-Leitfähigkeit, welche an dem ersten Leitfähigkeitssensor 25.1 hergestellt werden soll, vorgegeben. Sie gibt den Grad der gewünschten Entmineralisierung des Heizungswassers vor. Weiterhin werden über die Eingabeeinheit 11 Angaben zu in der Heizungsanlage verwendeten Materialien eingegeben. Vorzugsweise wird eingegeben, ob in der Heizungsanlage Bauteile aus Aluminium verwendet sind. Sind keine Aluminiumbauteile in der Heizungsanlage verwendet, wird ein angestrebter pH-Wert des Heizungswassers im Bereich zwischen 8 und 10 vorgegeben. Bei der Anwesenheit von Aluminiumbauteilen wird der einzustellende pH-Wert stärker eingegrenzt, vorzugsweise auf einen Bereich von 8,2 bis 8,5. Der pH-Wert des nach dem lonentauscher 27 vorliegenden, vollentsalzten Wassers korreliert mit dessen Leitfähigkeit. Unter Berücksichtigung des verwendeten lonentauschers, insbesondere des Mischungsverhältnisses zwischen dem Anionen- und Kationentauscher-Harz, kann so eine zweite Ziel-Leitfähigkeit an dem zweiten Leitfähigkeitssensor 25.2 vorgegeben werden, der das Erreichen des gewünschten pH-Wertes kennzeichnet. Es erfolgt eine weitere Eingabe über die Kapazität des verwendeten lonentauschers 27.

Der Wasseraufbereitungsbetrieb erfolgt in regelmäßigen Abständen, beispielsweise einmal in 24 Stunden. Dazu wird das Magnetventil 26 geöffnet und die Pumpe 23 gestartet. Ein Teilstrom des Heizungswassers gelangt jetzt über den Heizungswasser-Zulauf 21 in die Wasserführung der Wasseraufbereitungseinrichtung 20. In dem Filter 24 werden feste Bestandteile aus dem Teilstrom gefiltert. Anschließend wird an dem ersten Leitfähigkeitssensor 25.1 die Leitfähigkeit des Wassers bestimmt und mit der ersten Ziel-Leitfähigkeit verglichen. Der Teilstrom wird durch den lonentauscher 27 geleitet und entmineralisiert. Dabei verändert sich sein pH-Wert. Die Leitfähigkeit des entmineralisierten Wassers wird nach dem lonentauscher 27 mit dem zweiten Leitfähigkeitssensor 25.2 bestimmt und mit der zweiten Ziel-Leitfähigkeit verglichen. Der Durchflussmesser 28 ermittelt den Volumenstrom des in der Wasserführung geführten Teilstroms.

Der Kationentauscher tauscht die im Wasser vorhandenen, positiv geladenen Ionen (Kalium, Natrium, Magnesium, Calcium) gegen Wasserstoffionen aus. Entsprechend tauscht der Anionentauscher negativ geladene Ionen (Kohlensäure, Kieselsäure, Chloride, Sulfate, Nitrate) gegen Hydroxidionen. Dadurch wird das Wasser entmineralisiert. Aufgrund des Überschusses des Anionentauschers und dessen höherer Reaktionsgeschwindigkeit gegenüber dem Kationentauscher werden dem durchgeleiteten Wasser mehr Hydroxid als Wasserstoffionen zugeführt. Dadurch steigt sein pH-Wert. Der Teilstrom des Heizungswassers wird so lange durch die Wasseraufbereitungseinrichtung 20 geleitet, bis an dem ersten Leitfähigkeit Sensor 25.1 die erste Ziel-Leitfähigkeit und an dem zweiten Leitfähigkeitssensor 25.2 die zweite Ziel-Leitfähigkeit nachgewiesen wird. Das Erreichen der ersten Ziel-Leitfähigkeit signalisiert dabei, dass das Heizungswasser auf die gewünschte Härte entmineralisiert wurde. Das Erreichen der zweiten Ziel-Leitfähigkeit gibt an, dass der pH-Wert in die gewünschte Richtung dirigiert wurde. Durch den Überschuss an von dem Anionentauscher bereitgestellten Hydroxidionen kann der pH-Wert etwas angehoben werden. Liegt der pH-Wert des Heizungswassers in seinem Ausgangszustand jedoch beispielsweise um mehr als 1,5 bis 2 pH-Wert-Stufen unter dem geforderten pH-Wert-Bereich, so kann der pH-Wert durch Zugabe eines geeigneten Alkalisierungs-/Stabilisierungsmittels auf den gewünschten pH-Wert-Zielbereich eingestellt werden, wobei gleichzeitig eine Stabilisierung (Pufferung) des pH-Wertes des Heizungswassers erfolgt. Dazu kann beispielsweise eine Filtertasse des vor dem lonentauscher 27 angeordneten Filters 24 als Einzugsschleuse für das Alkalisierungs-/Stabilisierungsmittel verwendet werden. Liegt der pH-Wert des Heizungswassers über dem gewünschten pH-Wert-Zielbereich, so kann so lange Heizungswasser durch den lonentauscher 27 geleitet werden, bis der Anionentauscher aufgebraucht ist. In dem lonentauscher 27 ist der Kationentauscher weiter aktiv. Entsprechend werden dem Heizungswasser vom Kationentauscher Wasserstoffionen zugeführt, wodurch sein pH-Wert sinkt. Zur Absenkung des pH-Wertes kann es erforderlich sein, dass die Leitfähigkeit an dem ersten Leitfähigkeitssensor 25.1 unter die erste Ziel-Leitfähigkeit absinkt. Dies kann toleriert werden, da eine zu niedrige Härte des Wassers nicht gegen gültige Richtlinien verstößt.

Sind die erste Ziel-Leitfähigkeit und die zweite Ziel-Leitfähigkeit erreicht bzw. ist die zweite Ziel-Leitfähigkeit erreicht und die erste Ziel-Leitfähigkeit unterschritten, so wird der Wasseraufbereitungsbetrieb beendet. Dazu wird das Magnetventil 26 geschlossen und die Pumpe 23 abgeschaltet.

Erfindungsgemäß ist in Strömungsrichtung 40 nach dem Rückflussverhinderer 50 und vor dem lonentauscher 27 und dem Magnetventil 26 die Wasserzuführung 30 mit der Wasserführung der Wasseraufbereitungseinrichtung 20 verbunden. Wie bereits beschrieben, stellt die Wasserzuführung 30 eine Verbindung zwischen der Wasserführung der Wasseraufbereitungseinrichtung 20 und einem Wasser-Verteilungsnetz her. Mit Hilfe des Druckminderers 33 wird der Druck des durch die Wasserzuführung 30 zugeführten Nachspeisewassers auf einen Solldruck der Heizungsanlage eingestellt. Ist die Heizungsanlage während des Wasseraufbereitungsbetriebs korrekt befüllt, so weist das in der Wasserführung der Wasseraufbereitungseinrichtung 20 geführte Heizungswasser den Solldruck und damit den gleichen Druck wie das Nachspeisewasser am Nachspeisewasser-Zulauf 35 auf. Es strömt kein Nachspeisewasser in die Wasseraufbereitungseinrichtung 20. Der Systemtrenner 32 verhindert, dass Heizungswasser über die Wasserzuführung 30 in das Wasser-Verteilungsnetz gelangt. Liegt der Druck des Heizungswassers aufgrund von Wasserverlusten der Heizungsanlage unter dem Solldruck, so strömt während des Wasseraufbereitungsbetriebs Nachspeisewasser, welches nach dem Druckminderer den Solldruck aufweist, von dem Wasser-Verteilungsnetz über die Wasserzuführung 30 und den Nachspeisewasser-Zulauf 35 in die Wasserführung der Wasseraufbereitungseinrichtung 20. Es durchmischt sich dort mit dem in der Wasserführung der Wasseraufbereitungseinrichtung 20 geführten Heizungswasser. Die Heizungsanlage wird auf diese Weise so lange nachgefüllt, bis der Druck des Heizungswassers in der Heizungsanlage dem Solldruck entspricht. Der Rückflussverhinderer 50 verhindert, dass das noch nicht entmineralisierte Nachspeisewasser entgegen der Strömungsrichtung 40 in den Heizkreislauf der Heizungsanlage gelangt. Das dem in der Wasseraufbereitungseinrichtung 20 geführten Teilstrom des Heizungswassers beigemischte Nachspeisewasser wird somit vollständig dem lonentauscher 27 zugeführt und entmineralisiert. Die Leitfähigkeit der Mischung aus dem in der Wasseraufbereitungseinrichtung 20 geführten Teilstrom des Heizungswassers und dem Nachspeisewasser wird an dem ersten Leitfähigkeitssensor 25.1 gemessen. Die zusätzlich durch das Nachspeisewasser eingebrachte Wasserhärte kann so bei der Bestimmung der Belastung des lonentauschers 27 mit berücksichtigt werden.

Außerhalb des Wasseraufbereitungsbetriebs verhindern der Rückflussverhinderer und das fernsteuerbare Ventil (Magnetventil 26), dass Nachspeisewasser aus dem Wasser-Verteilungsnetz in die Wasserführung der Wasseraufbereitungseinrichtung 20 und von dort in die Heizungsanlage fließt.

Die erfindungsgemäße Zuführung des Nachspeisewassers in die Wasserführung der im Nebenschluss betriebenen Wasseraufbereitungseinrichtung 20 führt dazu, dass das gesamte zugeführte Nachspeisewasser entmineralisiert bzw. enthärtet wird. Auf eine zusätzliche Anlage zur Entmineralisierung von der Heizungsanlage zugeführtem Nachspeisewasser kann daher verzichtet werden. Durch den Rückflussverhinderer wird vermieden, dass nicht entmineralisiertes Nachspeisewasser in den Heizungskreislauf gelangt. Die Härte der Mischung aus Heizungswasser und Nachspeisewasser werden von den Leitfähigkeitssensoren 25.1, 25.2 indirekt durch Messung der Leitfähigkeit erfasst und beim Betrieb der Wasseraufbereitungseinrichtung 20 berücksichtigt.

Durch die Einstellung des Drucks des Nachspeisewassers auf den Solldruck der Heizungsanlage wird erreicht, dass bei Wasserverlusten das Heizungswasser bei jedem Wasseraufbereitungsbetrieb nachgefüllt wird.

## Patentansprüche

1. Wasseraufbereitungseinrichtung (20) zur Entmineralisierung und zum gleichzeitigen Einstellen des pH-Wertes von Heizungswasser einer Heizungsanlage, wobei eine Wasserführung der Wasseraufbereitungseinrichtung (20) über zumindest einen Heizungswasser-Zulauf (21) und zumindest einen Ablauf (29) im Nebenschluss derart an die Heizungsanlage anschließbar ist, dass sie in einem Wasseraufbereitungsbetrieb von einem Teilstrom des Heizungswassers durchströmt wird, wobei entlang der Wasserführung zumindest eine Pumpe (23), ein fernsteuerbares Ventil (Magnetventil (26)), ein lonentauscher (27), aufweisend Anionen- und Kationentauscher, ein in Strömungsrichtung vor dem lonentauscher (27) angeordneter erster Leitfähigkeitssensor (25.1) zur Bestimmung einer ersten Leitfähigkeit und ein in Strömungsrichtung nach dem lonentauscher (27) angeordneter zweiter Leitfähigkeitssensor (25.2) zur Bestimmung einer zweiten Leitfähigkeit angeordnet sind, mit einer Steuerungseinrichtung (10), welche den Durchfluss durch die Wasseraufbereitungseinrichtung (20) derart steuert, dass sich am ersten Leitfähigkeitssensor (25.1) eine erste Ziel-Leitfähigkeit und/oder am zweiten Leitfähigkeitssensor (25.2) in Abhängigkeit zumindest von in der Heizungsanlage verwendeten Materialien eine zweite Ziel-Leitfähigkeit einstellt,
**dadurch gekennzeichnet,**
**dass** in Strömungsrichtung (40) des durch die Wasseraufbereitungseinrichtung (20) fließenden Teilstroms vor dem lonentauscher und vor dem fernsteuerbaren Ventil (Magnetventil (26)) ein über eine Wasserzuführung (30) an ein Wasser-Verteilungsnetz anschließbarer Nachspeisewasser-Zulauf (35) Zugang zu der Wasserführung der Wasseraufbereitungseinrichtung (20) schafft und dass in Strömungsrichtung (40) des durch die Wasseraufbereitungseinrichtung (20) fließenden Teilstroms vor dem Nachspeisewasser-Zulauf (35) ein Rückflussverhinderer in die Wasserführung geschaltet ist.

2. Wasseraufbereitungseinrichtung (20) nach Anspruch 1, **dadurch gekennzeichnet, dass** in die Wasserzuführung (30) ein Druckminderer (33) geschaltet ist.

3. Wasseraufbereitungseinrichtung (20) nach Anspruch 1 oder 2, **dadurch gekennzeichnet, dass** in die Wasserzuführung (30) ein Systemtrenner geschaltet ist.

4. Wasseraufbereitungseinrichtung (20) nach einem der Ansprüche 1 bis 3, **dadurch gekennzeichnet, dass** in die Wasserzuführung (30) ein Wasserzähler geschaltet ist.

5. Wasseraufbereitungseinrichtung (20) nach einem der Ansprüche 1 bis 4, **dadurch gekennzeichnet, dass** die Steuerungseinrichtung (10) zumindest mit der Pumpe (23), den Leitfähigkeitssensoren (25.1, 25.2), dem fernsteuerbaren Ventil (Magnetventil (26)) und einem in die Wasserführung integrierten Durchflussmesser (28) verbunden ist und dass die Steuerungseinrichtung (10) dazu ausgebildet ist, in Abhängigkeit von einer oder mehreren zeitlichen Vorgaben dass fernsteuerbar Ventil (Magnetventil (26)) zu öffnen und die Pumpe (23) einzuschalten und in Abhängigkeit von einer mit dem ersten Leitfähigkeitssensor (25.1) gemessenen ersten Leitfähigkeit und/oder einer mit dem zweiten Leitfähigkeitssensor (25.2) gemessenen zweiten Leitfähigkeit und/oder einer mit dem Durchflussmesser (28) gemessenen Durchflussmenge das fernsteuerbare Ventil (Magnetventil (26)) zu schließen und die Pumpe (23) auszuschalten.

6. Wasseraufbereitungseinrichtung (20) nach einem der Ansprüche 1 bis 5, **dadurch gekennzeichnet, dass** die Steuerungseinrichtung (10) dazu ausgebildet ist, die zweite Ziel-Leitfähigkeit in Abhängigkeit von in der Heizungsanlage verwendeten Materialien und/oder dem pH-Wert des Heizungswassers im Ausgangszustand und/oder in Abhängigkeit von dem Aufbau und/oder der Zusammensetzung des verwendeten lonentauschers vorzugeben.

7. Verfahren zur Zuführung von Nachspeisewasser in einen Heizungskreislauf einer Heizungsanlage, wobei eine Wasseraufbereitungseinrichtung (20) zum Entmineralisieren und zum Einstellen des pH-Wertes des Heizungswassers der Heizungsanlage in einen vorgegebenen pH-Wert-Zielbereich im Nebenschluss mit dem Heizungskreislauf verbunden ist, wobei ein Teilstrom des Heizungswassers in dem Nebenschluss entlang einer Wasserführung über einen lonentauscher (27), enthaltend einen Kationentauscher und einen Anionentauscher, geleitet wird, wobei in Strömungsrichtung des Teilstroms vor dem lonentauscher (27) ein erster Leitfähigkeitssensor (25.1) und nach dem lonentauscher (27) ein zweiter Leitfähigkeitssensor (25.2) angeordnet sind und wobei der Teilstrom des Heizungswassers in zeitlichen Abständen so lange durch die Wasseraufbereitungseinrichtung (20) geleitet wird, dass sich an dem ersten Leitfähigkeitssensor (25.1) eine vorgegebene erste Ziel-Leitfähigkeit und/oder an dem zweiten Leitfähigkeitssensor (25.2) eine zumindest in Abhängigkeit von in der Heizungsanlage verwendeten Materialien vorgegebene zweite Ziel-Leitfähigkeit einstellt,
**dadurch gekennzeichnet,**
**dass** das Nachspeisewasser in Strömungsrichtung des Teilstroms des Heizungswassers vor dem lonentauscher (27) der Wasserführung der Wasseraufbereitungseinrichtung (20) zugeführt wird.

8. Verfahren nach Anspruch 7, **dadurch gekennzeichnet, dass** das Nachspeisewasser in Strömungsrichtung des Teilstroms des Heizungswassers vor einem fernsteuerbaren Ventil (Magnetventil (26)) und nach einem Rückflussverhinderer (50) der Wasserführung der Wasseraufbereitungseinrichtung (20) zugeführt wird.

9. Verfahren nach Anspruch 7 oder 8, **dadurch gekennzeichnet, dass** der Druck des Nachspeisewassers auf den Solldruck der Heizungsanlage eingestellt wird.

10. Verfahren nach Anspruch einem der Ansprüche 7 bis 9, **dadurch gekennzeichnet, dass** das Nachspeisewasser der Wasserführung in Strömungsrichtung des Teilstroms des Heizungswassers vor einer in der Wasserführung angeordneten Pumpe (23) der Wasserführung zugeführt wird.

11. Verfahren nach einem der Ansprüche 7 bis 10, **dadurch gekennzeichnet, dass** die Menge des zugeführten Nachspeisewassers bestimmt und bei der Ermittlung der Restkapazität des lonentauschers (27) berücksichtigt wird.

12. Verfahren nach einem der Ansprüche 1 bis 11,
**dadurch gekennzeichnet,**
**dass** die mögliche Nachfüllmenge an Nachspeisewasser über die Restkapazität des lonentauschers (27) begrenzt wird, um einen Schutz vor größeren Leckagen zu erreichen
